# EUROPEAN PATENT SPECIFICATION

(11) **EP 4 249 883 B1**
(45) Date of publication and mention of the grant of the patent: **03.09.2025**
(21) Application number: 21893602.9
(22) Date of filing: 29.09.2021
(51) Int. Cl.: G01B 11/14, G01M 13/00

(54) **SPLINE SCREW TESTING DEVICE**
PRÜFVORRICHTUNG FÜR KEILSCHRAUBEN
DISPOSITIF D'ESSAI DE VIS À CANNELURE

(30) Priority: 17.11.2020 CN 202011285896
(43) Date of publication of application: 27.09.2023
(73) Proprietor: KUKA Robotics Guangdong Co., Ltd., Foshan, Guangdong 528000 (CN)
(72) Inventor: XU, Wencai, Foshan, Guangdong 528000 (CN)
(74) Representative: Oelke, Jochen
(86) International application number: PCT/CN2021/121587
(87) International publication number: WO 2022/105452

(56) References cited:
- CN-A- 108 871 768
- CN-A- 111 351 658
- CN-A- 111 855 196
- CN-A- 112 414 704
- CN-B- 102 095 541
- CN-U- 204 115 926
- CN-U- 205 192 670
- CN-U- 211 504 527
- CN-U- 211 877 370
- US-A1- 2012 303 294

## Description

This application claims the priority of Chinese Patent Application No. 202011285896.4 filed on Tuesday, November 17, 2020 and entitled "Spline screw testing device".

### TECHNICAL FIELD

The present application relates to the technical field of testing devices, and in particular, to a spline screw testing device.

### BACKGROUND

With the rapid development of Industry 4.0, the demand for industrial robots in the field of industrial automation is increasing, and at the same time, higher and higher requirements are also put forward for their performance parameters. As a result, the performance requirements of the spline screw, one of the core components of industrial robots, have also increased. Therefore, how to test the spline screw to ensure the performance of the spline screw in actual use has become an urgent technical problem to be solved.

Spline screw testing devices are known from CN102095541 and CN111351658.

### Summary

The purpose of this application is to provide a spline screw testing device, which can test the spline screw and improve the testing efficiency of the spline screw.

In order to solve the above technical problems, the present application provides a spline screw testing device, the spline screw testing device base, a clamping assembly and a first testing mechanism which are arranged on the base, and the clamping assembly is configured to clamp a spline screw, the first testing mechanism includes:
a mounting base, movably connected with the base, and the mounting base can move along the axial direction of the clamped spline screw;
the first driving member is fixed on the mounting base , and an output shaft of the first driving memberis connected to an inner ring of a spline nut of the spline screw by means of a connecting assembly; by means of the connecting assembly, the first driving member can apply, to the inner ring, an action force for driving the inner ring to rotate;
and the range finder is arranged on the mounting base, and the range finder is configured to measure the amount of rotation of the inner ring when the action force is applied.

Further, the clamping assembly includes a fixed clamping member and a movable clamping member that cooperate with each other; the movable clamping member is movably connected with the base, and the fixed clamping member and the movable clamping member are provided with clamping through holes.

Further, the fixed clamping member and the movable clamping member include a fixed end and a movable end, the movable end is hinged on the fixed end; the fixed end is provided with a first half hole, and the movable end is provided with a second half hole, and the first half hole and the second half hole are matched to form the clamping through hole.

Further, the diameter of the clamping through hole decreases in a stepwise manner along the direction away from the clamped spline screw.

Further, the testing device further includes a position adjustment mechanism, and the position adjustment mechanism includes:
a second driving member, disposed on the base;
a first ball screw is arranged on the base, the screw of the first ball screw is fixedly connected with a output shaft of the second driving member, and a nut of the first ball screw is fixedly connected to the movable clamping member.

Further, a linear guide rail is provided on the base, and the movable clamping member is slidably connected to the linear guide rail through a first jacking assembly, and the first jacking assembly includes:
a first movable base, slidably connected to the linear guide rail;
a first fixing member, which passes through the movable clamping member and is fixedly connected to the first movable base;
a first elastic member, sleeved on the first fixing member, and both ends of the first elastic member are respectively abutted with the movable clamping member and the first movable base.

Further, the testing device further includes a locking assembly, and the locking assembly includes:
a bar-shaped hole, which is opened on the base, and the bar-shaped hole is arranged along the axial direction of the first ball screw;
a second fixing member, passes through the movable clamping member and is matched with the bar-shaped hole, so as to fix the relative position between the movable clamping member and the base.

Further, the testing device also includes a second test mechanism, and the second test mechanism includes:
a third driving member, disposed on the base;
a second ball screw is arranged on the base, the screw of the second ball screw is drivingly connected with a output shaft of the third driving member, and a nut of the second ball screw is fixedly connected to the mounting base;
A force sensor, arranged on the mounting base, and the detection end of the force sensor is connected to the inner ring.

Further, a linear guide rail is provided on the base, and the mounting base is slidably connected to the linear guide rail through a second jacking assembly, and the second jacking assembly includes:
a second movable base, slidably connected to the linear guide rail;
a second fixing member, which passes through the mounting base and is fixedly connected to the second movable base;
a second elastic member, sleeved on the second fixing member, and both ends of the second elastic member are respectively abutted with the mounting base and the second movable base.

Further, the testing device also includes a third test mechanism, and the third test mechanism includes:
a push rod, arranged on the mounting base, the push rod is configured to push the spline nut of the spline screw to move together when the mounting base moves;
a mirror group, fixedly connected to the inner ring of the spline nut of the spline screw;
a laser interferometer, arranged opposite to the mirror group.

As can be seen from the above technical solutions, the application at least has the following advantages and positive effects:
The present application provides a testing device for a spline screw, the device includes a base, a clamping assembly and a first testing mechanism arranged on the base, the clamping assembly is configured for clamping the spline screw, and the first testing mechanism includes a mounting base, a first driving member and a distance meter, wherein the mounting base is movably connected with the base, the mounting base can move along the axial direction of the clamped spline screw, the first driving member is fixed on the mounting base, the output shaft of the first driving member is connected to the inner ring of the spline nut of the spline screw through the connecting assembly, the first driving member can apply the force of the rotation of the driver to the inner ring through the connecting assembly, and the range finder is arranged on the mounting base, the range finder can be configured to detect the amount of rotation of the inner ring when a force is applied. Therefore, through the first testing mechanism, By testing the rotation amount of the inner ring of the spline nut of the spline screw when the fixed force is applied, the rotation clearance and rotation stiffness of the spline nut can be tested. Compared with manual detection, the first test mechanism ensures the accuracy of the test of the spline screw, thus ensuring the accuracy of the test results of the spline screw, and also improving the test efficiency of the spline screw.

### BRIEF DESCRIPTION OF THE DRAWINGS

FIG. 1 is a schematic structural diagram of a spline screw testing device from a first perspective according to an embodiment of the present application.
FIG. 2 is a schematic structural diagram of a spline screw testing device from a second perspective according to an embodiment of the present application.
FIG. 3 is a schematic structural diagram of a movable clamping member in an embodiment of the present application.
FIG. 4 is a schematic view of the assembly of the movable clamping member and the first lifting component in an embodiment of the present application.

Reference numerals are explained as follows: X-spline screw; Y-spline nut; 100-base; 210-fixed clamping member; 220-movable clamping member; 310-mounting base; 320-first driving member 330 -connecting components; 340-range finder; 221-Clamping through hole; 222-Fixed end; 223-movable end; 410-Second driving member; 420-First ball screw; 500- linear guide rail; 610-first movable base; 620-first fixing member; 710-bar-shaped hole; 720-second fixing member; 810-third driving member; 820-second ball screw; 830-force sensor; 910-push rod; 920 - mirror group; 930 - Laser interferometer.

### DETAILED DESCRIPTION

In the description of this application, it should be understood that the terms "center", "longitudinal", "lateral", "length", "width", "thickness", "upper", "lower", "front", " "rear", "left", "right", "vertical", "horizontal", "top", "bottom", "inner", "outer", "clockwise", "counterclockwise", etc. and other indicated orientations or positional relationships are based on those shown in the attached drawing, which is only for the convenience of describing the present application and simplifying the description, rather than indicating or implying that the referred device or element must have a specific orientation, be constructed and operated in a specific orientation. Therefore, it should not be construed as a limitation on this application. In addition, the terms "first" and "second" are only used for descriptive purposes, and should not be construed as indicating or implying relative importance or implying the number of indicated technical features. Thus, features defined as "first", "second" may expressly or implicitly include one or more of said features. In the description of the present application, "plurality" means two or more, unless otherwise expressly and specifically defined.

In the description of this application, it should be noted that, unless otherwise expressly specified and limited, the terms "installed", "connected with" and "connected to" should be understood in a broad sense, for example, it may be a fixed connection or a detachable connection connected, or integrally connected. It can be a mechanical connection or an electrical connection. It can be directly connected, or indirectly connected through an intermediate medium, and it can be the internal communication between two elements or the interaction relationship between the two elements. For those of ordinary skill in the art, the specific meanings of the above terms in this application can be understood according to specific situations.

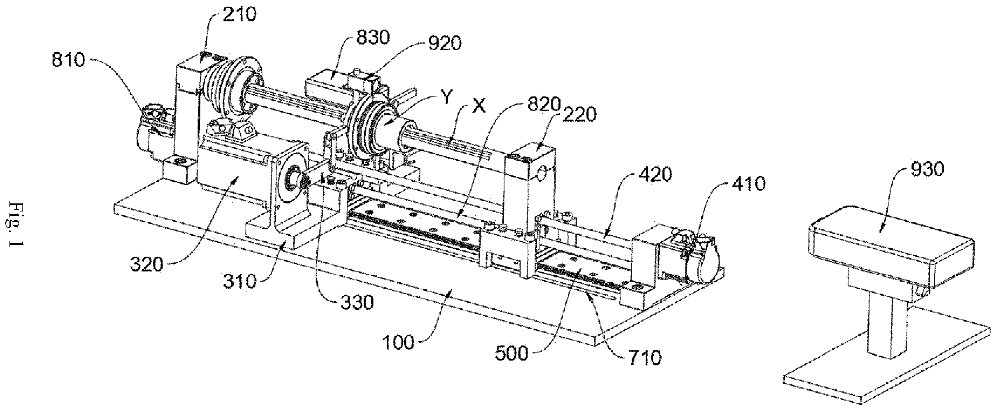

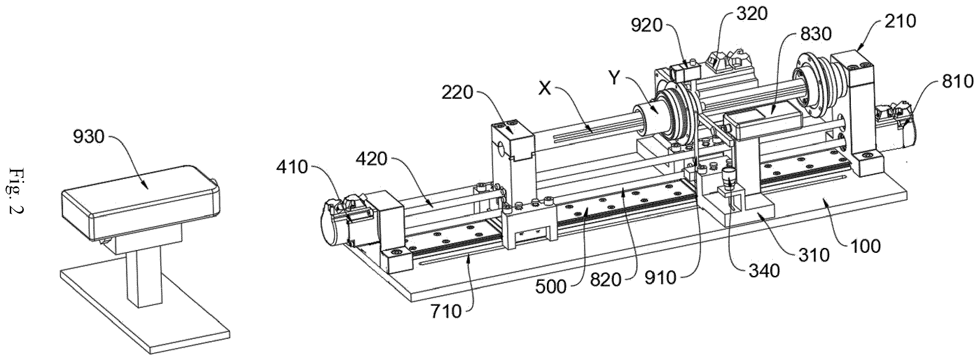

Referring to Fig. and Fig. 2, FIG. 1 is a schematic structural diagram of a spline screw testing device from a first perspective according to an embodiment of the present application, and Fig. 2 is a schematic structural diagram of a spline screw testing device from a second perspective according to an embodiment of the present application.

As shown in FIG. 1 and FIG. 2, an embodiment of the present application provides a spline screw testing device. The spline screw testing device includes a base (100), and a clamping assembly and a first testing mechanism which are arranged on the base (100).

Among them, the base 100 is configured to carry various types of devices, which can be plate-like structures of various shapes. For example, the base 100 can be a plate-like structure such as a rectangle, a square, a circle, or other polygons, which is not limited in this application.

The clamping assembly is disposed on the base 100 and is configured for clamping the spline screw X to be tested, so as to realize the stable placement of the spline screw X during testing, and prevent the shaking of the spline lead screw x during the test from affecting the test results.

The first testing mechanism is disposed on the base 100, and the first testing mechanism includes a mounting base 310 , a first driving member 320 and a range finder 340. Among them, the mounting base 310 is movably connected with the base 100, so that the mounting base 310 can slide on the base 100. Specifically, the mounting base 310 can reciprocate along the axial direction of the clamped spline screw X, Therefore, the performance of each position of the spline screw X can be tested, which not only improves the accuracy of the test on the spline screw X, but also improves the application range of the testing device.

The first driving member 320 is fixed on the mounting base 310, and the output shaft of the first driving member 320 is connected with the inner ring of the spline nut Y of the spline screw X through the connecting assembly 330, so that the first driving member 320 can apply a force to drive the inner ring to rotate through the connecting assembly 330. Optionally, the first driving member 320 may be a servo motor, a driving motor, a pneumatic pump or a hydraulic pump, or the like.
and the range finder (340) is arranged on the mounting base (310), and the range finder (340) is configured to measure the amount of rotation of the inner ring when the action force is applied. Specifically, the range finder 340 may be an infrared range finder 340 or a distance measuring device such as a laser range finder 340. The distance meter 340 can detect the rotation amount of the inner ring of the spline nut Y when the inner ring of the spline nut Y is exerted by the first driving member 320, so that the rotational clearance and rotational stiffness of the spline screw x can be calculated based on the rotational amount, the magnitude of the force applied by the first driving member 320, and the torque. It should be noted that the calculation methods of the rotation clearance and the optional stiffness may adopt the existing calculation methods, which are not specially limited in this application.

In this way, when the first testing mechanism tests the spline screw X, the clamping assembly can be used to clamp the spline screw X to be tested, and the first driving member 320 applies a force to the inner ring of the spline nut y of the spline screw x, and the range finder 340 can detect the rotation amount of the inner ring of the spline nut y of the spline screw X, so as to realize the test of the rotation clearance and rotation stiffness of the spline screw X, ensuring the accuracy of the test results for the spline screw X. At the same time, since the first driving member 320 and the range finder 340 are disposed on the mounting base 310, and the mounting base 310 can reciprocate along the axial direction of the clamped spline screw X, the first testing mechanism can detect each position of the spline screw X, which further ensures the accuracy and comprehensiveness of the test results.

Referring to FIG. 1, in an embodiment of the present application, the connecting assembly 330 includes a first connecting rod, a second connecting rod and a third connecting rod, wherein one end of the first connecting rod is fixedly connected to the output shaft of the first driving member 320, and the axial direction of the first connecting rod is perpendicular to the axial direction of the output shaft of the first driving member 320, the other end of the first connecting rod is hinged with one end of the second connecting rod, and one end of the third connecting rod is hinged with the other end of the second connecting rod, and the other end of the third connecting rod is fixed with the inner ring of the spline nut Y.

Before the test, the third connecting rod and the first connecting rod are horizontally arranged, and the axial direction of the third connecting rod points to the center position of the inner ring, and the second connecting rod is vertically connected between the first connecting rod and the third connecting rod. Therefore, when the output shaft of the first driving member 320 drives the first connecting rod to rotate upward, through the transmission of the connecting assembly 330, a vertical upward force of the same magnitude can be applied to the inner ring through the third connecting rod, thereby testing the rotational rigidity and rotational clearance of the spline nut Y

During the test, the first driving member 320 can exert a vertical upward force on both sides of the inner ring through the connecting assembly, and there will be obvious angular deformation when the torque is zero. Therefore, the angular deformation of the inner ring can be calculated under the condition of force on both sides, so as to obtain the rotation clearance of the inner ring. Similarly, when calculating the rotational stiffness of the spline screw, a vertical upward force can also be applied on both sides of the inner ring to obtain the forward rotational stiffness and reverse rotational stiffness of the spline screw.

Since it is also a vertical upward force, it can be ensured that the force output by the first driving member 320 is the same as the force received by the inner ring, so as to avoid the occurrence of wrong test results due to different force directions of the inner ring, and ensure the accuracy of the test results.

Referring to FIG. 1 and FIG. 2, in an embodiment of the present application, the clamping assembly includes a fixed clamping member 210 and a movable clamping member 220 that are matched. Among them, the fixed clamping member 210 is fixed on the base 100, and the movable clamping member 220 is movably connected with the base 100, so that the movable clamping member 220 can move relative to the fixed clamping member 210 to move away from or close to the fixed clamping member 210. Specifically, the movable clamping member 220 can reciprocate along the axial direction of the clamped spline screw X, so that the spline screw X of different lengths can be clamped, thereby improving the application range of the testing device.

The fixed clamping member 210 and the movable clamping member 220 are provided with clamping through holes 221. In actual use, both ends of the spline shaft of the spline screw X can be placed on the fixed clamping member 210 and the clamping through hole 221 on the movable clamping member 220, so as to realize the stable placement of the spline screw X.

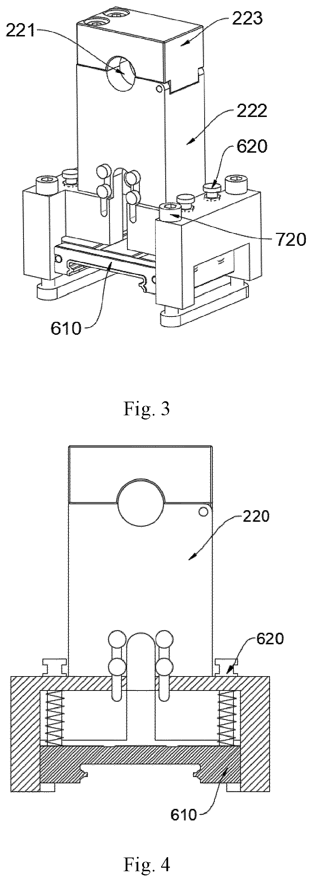

Please refer to FIG. 3, FIG. 3 is a schematic structural diagram of a movable clamping member in an embodiment of the present application. In an embodiment of the present application, both the fixed clamping member 210 and the movable clamping member 220 include a fixed end 222 and a movable end 223, the movable end 223 is hinged on the fixed end 222, and specifically, the movable end 223 is hinged on one side of the fixed end 223, so that the movable end 223 can be turned over relative to the fixed end 222. Meanwhile, the fixed end 222 is provided with a first half hole, and the movable end 223 is provided with a second half hole, and the first half hole and the second half hole cooperate to form the clamping through hole 221.

Therefore, in the actual use process, the user can first turn over the movable end 223, open the clamping through hole 221, and then place the two ends of the spline shaft of the spline screw X to be detected on the movable clamping member 220 and the first half hole on the fixed clamping member 210, and finally turn the movable end 223 back, so that the second half hole and the first half hole cooperate to clamp the spline shaft of the spline screw X .

Optionally, when the movable end 223 and the fixed end 222 are closed, a fixing member can be used to fix them to prevent the movable end 223 from rotating relative to the fixed end 222 during testing, so as to ensure the clamping effect of the spline screw X. Specifically, the fixing member may be a structure such as a bolt, a screw, or a buckle.

In an embodiment of the present application, the diameter of the clamping through hole 221 decreases in a stepwise manner along the direction away from the clamped spline screw X. It should be understood that not only the lengths of the spline screws X of different models are different, but also the diameters of the spline shafts. Therefore, the diameter of the clamping through hole 221 is reduced in steps, so that the clamping through hole 221 can be adapted to spline shafts of different diameters, so that spline shafts of different diameters can be clamped, improving the application scope of clamping assembly

It should be noted that the aperture size of the clamping through hole 221 can be set in advance according to the different diameters of the spline shaft, and then the different apertures are arranged in a certain order to form a stepped distribution, and the apertures of the clamping through holes 221 on the fixed clamping member 210 and the movable clamping member 220 are symmetrical and decrease stepwise in the direction away from each other.

Referring to FIG. 1 and FIG. 2, in an embodiment of the present application, the testing device further includes a position adjustment mechanism, and the position adjustment mechanism is configured to automatically adjust the relative position between the movable clamping member 220 and the fixed clamping member 210 . Specifically, the position adjustment mechanism includes a second driving member 410 and a first ball screw 420. Both the second driving member 410 and the first ball screw 420 are disposed on the base 100, and the screw rod of the first ball screw 420 is connected to the first ball screw 420. The output shafts of the two driving members 410 are fixedly connected, so that the second driving member 410 can drive the screw of the first ball screw 420 to rotate through the output shaft, so that the nut of the first ball screw 420 reciprocates along the axial direction of the screw. At the same time, the nut of the first ball screw 420 is fixedly connected to the movable clamping member 220, so that when the nut reciprocates, the movable clamping member 220 can be driven to move accordingly, so as to adjust relative position between the movable clamping member 220 and the fixed clamping member 210.

Therefore, through the setting of the position adjusting mechanism, the position of the movable clamping member 220 can be automatically adjusted by the second driving member 410, thus eliminating the trouble of manual adjustment, and the arrangement of the first ball screw 420 can make the movable clamping member 220 move smoothly and prevent the displacement during the movement from affecting the clamping of the spline screw X.

Please refer to FIG. 1, FIG. 2, FIG. 3 and FIG. 4 , in an embodiment of the present application, a linear guide rail 500 is provided on the base 100. Specifically, the linear guide rail 500 can be along the clamped spline screw X axial setting. The movable clamp 220 is slidably connected to the linear guide 500 through the first lifting assembly, so that the movable clamp 220 can slide on the linear guide rail 500, and the linear guide rail 500 may be disposed along the axial direction of the clamped spline screw X.

Specifically, the first jacking assembly includes a first movable base 610, a first fixing member 620 and a first elastic member. Among them, the first movable base 610 is slidably connected to the linear guide rail 500, and the first movable base 610 can reciprocate along the length direction of the linear guide rail 500. The first fixing member 620 passes through the movable clamping member 220 and is fixedly connected to the first movable base 610 to fix the relative position between the movable clamping member 220 and the first movable base 610, and the movable clamping member 220 can move along the first movable base 610. The top of the first fixing member 620 is provided with a limiting portion that limits the movable range of the movable clamping member 220, so as to prevent the movable clamping member 220 from coming out of the first fixing member 620.

a first elastic member is sleeved on the first fixing member620, and the first elastic member is located between the movable clamping member 220 and the first movable base 610, and both ends of the first elastic member are respectively abutted with the movable clamping member 220 and the first movable base 610. Therefore, the first elastic member can apply a vertical upward force to the movable clamping member 220, so that the movable clamping member 220 can be suspended in the air when the movable clamping member 220 reciprocates along the linear guide rail 500 to avoid contact with the base 100 to cause wear of the base 100 and the movable clamping member 220. The maintenance cost is reduced, and the service life of the movable clamping member 220 is also prolonged. In one example, the first movable base 610 may be a guide rail slider matched with the linear guide rail 500, and in other examples, the first movable base 610 may also be provided on the guide rail slider, so as to facilitate disassembly and and maintenance by technicians.

Please refer to FIG. 1, FIG. 2 and FIG. 3, in one embodiment of the present application, the testing device further includes a locking assembly, the locking assembly is configured for fixing the relative position between the bases 100 and the movable clamping member 220 without moving the movable clamping member 220 . Specifically, the locking assembly includes a bar-shaped hole 710 and a second fixing member 720, wherein the bar-shaped hole 710 is opened on the base 100, and the bar-shaped hole 710 is arranged along the axial direction of the first ball screw 420, that is, the longitudinal direction of the bar-shaped hole 710 is parallel to the axial direction of the first ball screw 420 .

The second fixing member 720 passes through the movable clamping member 220 and is matched with the bar-shaped hole 710, so as to fix the relative position between the movable clamping member 220 and the base 100. Specifically, the second fixing member 720 passes through the movable clamping member 220 and the bar-shaped hole 710 in sequence, and protrudes from the bottom of the bar-shaped hole 710. The second fixing member 720 can be a bolt. When the second fixing member 720 protrudes the bottom of the bar-shaped hole 710, it can be matched with a nut, so as to achieve the purpose of fixing the movable clamping member 220.

In actual use, if the movable clamping member 220 needs to be moved, the movable clamping member 220 can be released by rotating the nut matched with the second fixing member 720, so that the movable clamping member 220 can reciprocate along the linear guide 500. When the movable clamping member 220 needs to be fixed, after the movable clamping member 220 reaches the target position, the second fixing member 720 can drive the movable clamping member 220 to move downward by rotating the nut until it abuts with the base 100, thereby achieving the purpose of fixing the movable clamp 220.

In this way, the movable clamping member 220 can be fixed when necessary, and at the same time, the arrangement of the bar-shaped hole 710 may not affect the reciprocating movement of the movable clamping member 220 along the linear guide rail 500, so as to adjust the position of the movable clamping member 220.

Please refer to FIG. 1 and FIG. 2, in one embodiment of the present application, the testing device further includes a second testing mechanism, the second testing mechanism is configured to test the magnitude of the resistance that the spline nut y bears when moving linearly relative to the spline shaft. Specifically, the second testing mechanism includes a third driving member 810, a second ball screw 820 and a force sensor 830. The third driving member 810 and the second ball screw 820 are both disposed on the base 100, the screw of the second ball screw 820 is drivingly connected to the output shaft of the third drive, and the nut of the second ball screw 820 is fixedly connected to the mounting base 310.

Therefore, when the third driving member 810 drives the screw of the second ball screw 820 to rotate, the nut of the second ball screw 820 can drive the mounting base 310 to move linearly along the axial direction of the screw of the second ball screw 820. Meanwhile, the force sensor 830 is arranged on the mounting base 310, and the detection end of the force sensor 830 is connected to the inner ring of the spline nut y. Therefore, when the mounting base 310 moves in a straight line, the detection end of the force sensor 830 can push the spline nut Y to move in a straight line on the spline shaft, and the force sensor 830 can measure the magnitude of the resistance that the spline nut y bears when moving. In addition, the third driving member 810 can push the spline nut Y to move at different speeds, so as to measure the force under different speeds, thereby ensuring the accuracy of the test.

In an embodiment of the present application, the mounting base 310 may be slidably connected to the linear guide rail 500 provided on the base 100 through the second jacking assembly. The second jacking assembly includes a second movable base, a second fixing member 720 and a second elastic member. Specifically, the second movable base is slidably connected to the linear guide rail 500 , and the second fixing member 720 is fixedly connected to the second movable base through the mounting base 310, thereby fixing the relative position between the mounting base 310 and the second movable base. Meanwhile, the mounting base 310 can move up and down along the axial direction of the second fixing member 720. The top of the second fixing member 720 is provided with a limiting portion that limits the movement range of the mounting base 310, so as to prevent the mounting base 310 from coming out of the second fixing member 720.

a second elastic member is sleeved on the first fixing member 720, and the second elastic member is located between the movable clamping member 310 and the second movable base, and both ends of the second elastic member are respectively abutted with the mounting base 310 and the second movable base. Therefore, the second elastic member can exert an upward force on the mounting base 310 to lift off the mounting base 310, so as to prevent the mounting base 310 from contacting the base 100 when moving along the linear guide rail 500, thereby causing wear of both. In this way, the service life of the mounting base 310 can be prolonged, and the maintenance cost can be reduced.

In an embodiment of the present application, the mounting base 310 may also be provided with the locking assembly described in the above embodiment, so that when the mounting base 310 needs to be fixed, the relative position between the mounting base 310 and the base 100 is fixed by the locking assembly In addition, the two locking assemblies may share the same bar-shaped hole 710, which eliminates the need for extra processing and saves the processing steps. For the specific installation method, refer to the above-mentioned embodiments, and details are not described herein again in this application.

In an example, the inner ring of the spline nut Y may be provided with a push-pull portion extending outward, and when the second testing mechanism is in operation, the detection end of the force sensor 830 may be fixed to the push-pull portion, so that the detection end of the force sensor 830 can be fixed to the push-pull part to facilitate the installation of the force sensor 830. At the same time, it can ensure that the force receiving direction of the detection end of the force sensor 830 is parallel to the movement direction of the spline nut Y, so as to ensure the detection accuracy of the force sensor 830. Preferably, the push-pull portion may be formed by extending outward from one end of the connecting assembly 330 connected to the inner ring.

In an example, the push-pull part is provided with a strip-shaped through hole, the detection end of the force sensor 830 can pass through the bar-shaped through hole, and the detection end of the force sensor 830 is provided with two limit parts, the two limit parts are arranged on both sides of the bar-shaped through-hole to prevent the detection end from coming out of the bar-shaped through-hole. Therefore, when the force sensor 830 is detecting, the push-pull portion can be pushed and pulled through the setting of the limiting portion, so as to detect the magnitude of the resistance received by the spline nut during moving.

When the first testing mechanism is in operation, the range finder 340 can measure the rotation of the spline screw X under the driving of the first driving member 320 by detecting the rotation of the push-pull portion, so as to obtain the rotation clearance and rotation stiffness of the spline nut Y to ensure the accuracy of the test results.

Please refer to FIG. 1 and FIG. 2 , in an embodiment of the present application, the testing device further includes a third testing mechanism, and the third testing mechanism is configured to detect the travel straightness of the spline nut Y when the spline nut Y moves linearly on the spline shaft, that is, to detect the offset amount of the spline nut Y in the horizontal direction and the vertical direction when the spline nut Y moves linearly.

Specifically, the third testing mechanism includes a push rod 910, a mirror group 920 and a laser interferometer 930. The push rod 910 is disposed on the mounting base 310 to push the spline nut Y of the spline screw X to move together when the mounting base 310 moves along the linear guide rail 500, so that the spline nut Y moves linearly relative to the spline shaft.

The mirror group 920 is fixedly connected to the inner ring of the spline nut Y to move with the spline nut Y. The laser interferometer 930 is arranged opposite to the mirror group 920. In this way, the running straightness of the spline nut Y can be measured by the movement of the laser light emitted by the laser interferometer 930 on the mirror group 920.

Therefore, through the setting of the first testing mechanism, the second testing mechanism, and the third testing mechanism, various testing functions are integrated, and the structures of the testing mechanisms can cooperate with each other, which not only satisfies the testing requirements and improves the test efficiency of the spline screw, but also reduces the labor cost and economic cost of the test.

## Claims

1. A spline screw testing device comprising a base (100), a clamping assembly (210, 220) and a first testing mechanism (310, 320, 340) which are arranged on the base (100), and the clamping assembly (210, 220) is configured to clamp a spline screw to be tested (X), the first testing mechanism (310, 320, 340) includes:
a mounting base (310), movably connected with the base (100), and the mounting base (310) is configured to move along the axial direction of the clamped spline screw;
a first driving member (320) is fixed on the mounting base (310), and an output shaft of the first driving membe (320) is connected to an inner ring of a spline nut (Y) of the spline screw to be tested (X) by means of a connecting assembly (330); by means of the connecting assembly (330), the first driving member (320) is configured to apply, to the inner ring, an action force for driving the inner ring to rotate;
**characterized in that** it further comprises: a range finder (340) arranged on the mounting base (310), and the range finder (340) is configured to measure the amount of rotation of the inner ring when the action force is applied.

2. The test device according to claim 1, **characterized in that**, the clamping assembly includes a fixed clamping member and a movable clamping member that cooperate with each other; the movable clamping member is movably connected with the base, and the fixed clamping member and the movable clamping member are provided with clamping through holes.

3. The test device according to claim 2, **characterized in that**, the fixed clamping member and the movable clamping member include a fixed end and a movable end, the movable end is hinged on the fixed end; the fixed end is provided with a first half hole, and the movable end is provided with a second half hole, and the first half hole and the second half hole are matched to form the clamping through hole.

4. The test device according to claim 2, **characterized in that**, the diameter of the clamping through hole decreases in a stepwise manner along the direction away from the clamped spline screw.

5. The test device according to claim 2, **characterized in that**, the testing device further includes a position adjustment mechanism, and the position adjustment mechanism includes:
a second driving member, disposed on the base;
a first ball screw is arranged on the base, the screw of the first ball screw is fixedly connected with a output shaft of the second driving member, and a nut of the first ball screw is fixedly connected to the movable clamping member.

6. The test device according to claim 5, **characterized in that**, a linear guide rail is provided on the base, and the movable clamping member is slidably connected to the linear guide rail through a first jacking assembly, and the first jacking assembly includes:
a first movable base, slidably connected to the linear guide rail;
a first fixing member, which passes through the movable clamping member and is fixedly connected to the first movable base;
a first elastic member, sleeved on the first fixing member, and both ends of the first elastic member are respectively abutted with the movable clamping member and the first movable base.

7. The test device according to claim 5, **characterized in that**, the testing device further includes a locking assembly, and the locking assembly includes:
a bar-shaped hole, which is opened on the base, and the bar-shaped hole is arranged along the axial direction of the first ball screw;
a second fixing member, passes through the movable clamping member and is matched with the bar-shaped hole, so as to fix the relative position between the movable clamping member and the base.

8. The test device according to claim 1, **characterized in that**, the testing device also includes a second test mechanism, and the second test mechanism includes:
a third driving member, disposed on the base;
a second ball screw is arranged on the base, the screw of the second ball screw is drivingly connected with a output shaft of the third driving member, and a nut of the second ball screw is fixedly connected to the mounting base;
A force sensor, arranged on the mounting base, and the detection end of the force sensor is connected to the inner ring.

9. The test device according to claim 8, **characterized in that**, a linear guide rail is provided on the base, and the mounting base is slidably connected to the linear guide rail through a second jacking assembly, and the second jacking assembly includes:
a second movable base, slidably connected to the linear guide rail;
a second fixing member, which passes through the mounting base and is fixedly connected to the second movable base;
a second elastic member, sleeved on the second fixing member, and both ends of the second elastic member are respectively abutted with the mounting base and the second movable base.

10. The test device according to claim 1, **characterized in that**, the testing device also includes a third test mechanism, and the third test mechanism includes:
a push rod, arranged on the mounting base, the push rod is configured to push the spline nut of the spline screw to move together when the mounting base moves;
a mirror group, fixedly connected to the inner ring of the spline nut of the spline screw;
a laser interferometer, arranged opposite to the mirror group.

## Patentansprüche

1. Keilspindelprüfvorrichtung, die eine Basis (100), eine Spannanordnung (210, 220) und einen ersten Prüfmechanismus (310, 320, 340) umfasst, die auf der Basis (100) angeordnet sind, und wobei die Spannanordnung (210, 220) dazu ausgelegt ist, eine zu prüfende Keilspindel (X) einzuspannen, wobei der erste Prüfmechanismus (310, 320, 340) Folgendes umfasst:
eine Montagebasis (310), die beweglich mit der Basis (100) verbunden ist, und wobei die Montagebasis (310) dazu ausgelegt ist, sich entlang der axialen Richtung der eingespannten Keilspindel zu bewegen;
wobei ein erstes Antriebsglied (320) auf der Montagebasis (310) fixiert ist und eine Abtriebswelle des ersten Antriebsglieds (320) mit einem Innenring einer Keilmutter (Y) der zu prüfenden Keilspindel (X) mittels einer Verbindungsanordnung (330) verbunden ist; wobei mittels der Verbindungsanordnung (330) das erste Antriebsglied (320) dazu ausgelegt ist, auf den Innenring eine Aktionskraft zum Antreiben des Innenrings in eine Drehung aufzubringen;
**dadurch gekennzeichnet, dass** sie ferner Folgendes umfasst: einen Entfernungsmesser (340), der auf der Montagebasis (310) angeordnet ist, und wobei der Entfernungsmesser (340) dazu ausgelegt ist, den Betrag einer Drehung des Innenrings zu messen, wenn die Aktionskraft aufgebracht wird.

2. Prüfvorrichtung nach Anspruch 1, **dadurch gekennzeichnet, dass** die Spannanordnung ein fixiertes Spannglied und ein bewegliches Spannglied umfasst, die miteinander zusammenwirken; wobei das bewegliche Spannglied beweglich mit der Basis verbunden ist und das fixierte Spannglied und das bewegliche Spannglied mit Spanndurchgangslöchern versehen sind.

3. Prüfvorrichtung nach Anspruch 2, **dadurch gekennzeichnet, dass** das fixierte Spannglied und das bewegliche Spannglied ein fixiertes Ende und ein bewegliches Ende umfassen, wobei das bewegliche Ende auf dem fixierten Ende angelenkt ist; wobei das fixierte Ende mit einem ersten Halbloch versehen ist und das bewegliche Ende mit einem zweiten Halbloch versehen ist und das erste Halbloch und das zweite Halbloch angepasst sind, so dass sie das Spanndurchgangsloch bilden.

4. Prüfvorrichtung nach Anspruch 2, **dadurch gekennzeichnet, dass** der Durchmesser des Spanndurchgangslochs entlang der Richtung von der eingespannten Keilspindel weg schrittweise abnimmt.

5. Prüfvorrichtung nach Anspruch 2, **dadurch gekennzeichnet, dass** die Prüfvorrichtung ferner einen Positionseinstellmechanismus umfasst und der Positionseinstellmechanismus Folgendes umfasst:
ein zweites Antriebsglied, das auf der Basis angeordnet ist;
wobei eine erste Kugelgewindespindel auf der Basis angeordnet ist, wobei die Spindel der ersten Kugelgewindespindel fest mit einer Abtriebswelle des zweiten Antriebsglieds verbunden ist und eine Mutter der ersten Kugelgewindespindel fest mit dem beweglichen Spannglied verbunden ist.

6. Prüfvorrichtung nach Anspruch 5, **dadurch gekennzeichnet, dass** eine lineare Führungsschiene auf der Basis bereitgestellt ist und das bewegliche Spannglied durch eine erste Aufsteckanordnung verschiebbar mit der linearen Führungsschiene verbunden ist und die erste Aufsteckanordnung Folgendes umfasst:
eine erste bewegliche Basis, die verschiebbar mit der linearen Führungsschiene verbunden ist;
ein erstes Fixierglied, das durch das bewegliche Spannglied hindurchgeht und fest mit der ersten beweglichen Basis verbunden ist;
ein erstes elastisches Glied, das auf das erste Fixierglied aufgeschoben ist, und wobei beide Enden des ersten elastischen Glieds an dem beweglichen Spannglied bzw. der ersten beweglichen Basis anliegen.

7. Prüfvorrichtung nach Anspruch 5, **dadurch gekennzeichnet, dass** die Prüfvorrichtung ferner eine Verriegelungsanordnung umfasst und die Verriegelungsanordnung Folgendes umfasst:
ein stabförmiges Loch, das auf der Basis geöffnet ist, und wobei das stabförmige Loch entlang der axialen Richtung der ersten Kugelgewindespindel angeordnet ist;
ein zweites Fixierglied, das durch das bewegliche Spannglied hindurchgeht und an das stabförmige Loch angepasst ist, um die Relativposition zwischen dem beweglichen Spannglied und der Basis zu fixieren.

8. Prüfvorrichtung nach Anspruch 1, **dadurch gekennzeichnet, dass** die Prüfvorrichtung auch einen zweiten Prüfmechanismus umfasst und der zweite Prüfmechanismus Folgendes umfasst:
ein drittes Antriebsglied, das auf der Basis angeordnet ist;
wobei eine zweite Kugelgewindespindel auf der Basis angeordnet ist, wobei die Spindel der zweiten Kugelgewindespindel antriebsmäßig mit einer Abtriebswelle des zweiten Antriebsglieds verbunden ist und eine Mutter der zweiten Kugelgewindespindel fest mit der Montagebasis verbunden ist;
einen Kraftsensor, der auf der Montagebasis angeordnet ist, und wobei ein Detektionsende des Kraftsensors mit dem Innenring verbunden ist.

9. Prüfvorrichtung nach Anspruch 8, **dadurch gekennzeichnet, dass** eine lineare Führungsschiene auf der Basis bereitgestellt ist und die Montagebasis durch eine zweite Aufsteckanordnung verschiebbar mit der linearen Führungsschiene verbunden ist, und wobei die zweite Aufsteckanordnung Folgendes umfasst:
eine zweite bewegliche Basis, die verschiebbar mit der linearen Führungsschiene verbunden ist;
ein zweites Fixierglied, das durch die Montagebasis hindurchgeht und fest mit der zweiten beweglichen Basis verbunden ist;
ein zweites elastisches Glied, das auf das zweite Fixierglied aufgeschoben ist, und wobei beide Enden des zweiten elastischen Glieds an der Montagebasis bzw. der zweiten beweglichen Basis anliegen.

10. Prüfvorrichtung nach Anspruch 1, **dadurch gekennzeichnet, dass** die Prüfvorrichtung auch einen dritten Prüfmechanismus umfasst und der dritte Prüfmechanismus Folgendes umfasst:
eine Druckstange, die auf der Montagebasis angeordnet ist, wobei die Druckstange dazu ausgelegt ist, auf die Keilmutter der Keilspindel zu drücken, so dass sie sich zusammen bewegen, wenn sich die Montagebasis bewegt;
eine Spiegelgruppe, die fest mit dem Innenring der Keilmutter der Keilspindel verbunden ist;
ein Laserinterferometer, das der Spiegelgruppe gegenüberliegend angeordnet ist.

## Revendications

1. Dispositif de test de vis à cannelure comprenant une base (100), un ensemble de serrage (210, 220) et un premier mécanisme de test (310, 320, 340) qui sont disposés sur la base (100), et l'ensemble de serrage (210, 220) est conçu pour serrer une vis à cannelure à tester (X), le premier mécanisme de test (310, 320, 340) comprenant :
une base de montage (310), reliée mobile à la base (100), et la base de montage (310) est conçue pour se déplacer dans la direction axiale de la vis à cannelure serrée ; un premier organe d'entraînement (320) est fixé sur la base de montage (310), et un arbre de sortie du premier organe d'entraînement (320) est relié à une bague interne d'un écrou cannelé (Y) de la vis à cannelure à tester (X) au moyen d'un ensemble de liaison (330) ; au moyen de l'ensemble de liaison (330), le premier organe d'entraînement (320) est conçu pour appliquer à la bague interne une force d'actionnement pour entraîner la bague interne en rotation ;
**caractérisé en ce qu'**il comprend en outre : un télémètre (340) disposé sur la base de montage (310), et le télémètre (340) est conçu pour mesurer une quantité de rotation de la bague interne lorsque la force d'actionnement est appliquée.

2. Dispositif de test selon la revendication **1, caractérisé en ce que** l'ensemble de serrage comprend un organe de serrage fixe et un organe de serrage mobile qui coopèrent l'un avec l'autre ; l'organe de serrage mobile est relié mobile à la base, et l'organe de serrage fixe et l'organe de serrage mobile sont pourvus de trous traversants de serrage.

3. Dispositif de test selon la revendication 2, **caractérisé en ce que** l'organe de serrage fixe et l'organe de serrage mobile comprennent une extrémité fixe et une extrémité mobile, l'extrémité mobile est articulée sur l'extrémité fixe ; l'extrémité fixe est pourvue d'un premier demi-trou, et l'extrémité mobile est pourvue d'un second demi-trou, et le premier demi-trou et le second demi-trou sont mis en correspondance pour former le trou traversant de serrage.

4. Dispositif de test selon la revendication 2, **caractérisé en ce que** le diamètre du trou traversant de serrage diminue par pas dans la direction s'éloignant de la vis à cannelure serrée.

5. Dispositif de test selon la revendication 2, **caractérisé en ce que** le dispositif de test comprend en outre un mécanisme de réglage de position, et le mécanisme de réglage de position comprend :
un deuxième organe d'entraînement, disposé sur la base ;
une première vis à billes est disposée sur la base, la vis de la première vis à billes étant reliée de manière fixe à un arbre de sortie du deuxième organe d'entraînement, et un écrou de la première vis à billes étant relié de manière fixe à l'organe de serrage mobile.

6. Dispositif de test selon la revendication 5, **caractérisé en ce qu'**un rail de guidage linéaire est placé sur la base, et l'organe de serrage mobile est relié de façon coulissante au rail de guidage linéaire par l'intermédiaire d'un premier ensemble de calage, et le premier ensemble de calage comprend :
une première base mobile, reliée de façon coulissante au rail de guidage linéaire ;
un premier organe de fixation, qui passe à travers l'organe de serrage mobile et est relié de façon fixe à la première base mobile ;
un premier élément élastique, emmanché sur le premier organe de fixation, et les deux extrémités du premier élément élastique viennent respectivement en butée contre l'organe de serrage mobile et la première base mobile.

7. Dispositif de test selon la revendication 5, **caractérisé en ce que** le dispositif de test comprend en outre un mécanisme de verrouillage, et le mécanisme de verrouillage comprend :
un trou en forme de barre, qui est ouvert sur la base, et le trou en forme de barre est disposé dans la direction axiale de la première vis à billes ;
un second organe de fixation, qui passe à travers l'organe de serrage mobile et est mis en correspondance avec le trou en forme de barre, de façon à fixer la position relative entre l'organe de serrage mobile et la base.

8. Dispositif de test selon la revendication 1, **caractérisé en ce que** le dispositif de test comprend en outre un deuxième mécanisme de test, et le deuxième mécanisme de test comprend :
un troisième organe d'entraînement, disposé sur la base ; une seconde vis à billes est disposée sur la base, la vis de la seconde vis à billes étant reliée en entraînement à un arbre de sortie du troisième organe d'entraînement, et un écrou de la seconde vis à billes étant relié de manière fixe à la base de montage ;
un capteur de force, disposé sur la base de montage, et l'extrémité de détection du capteur de force est reliée à la bague interne.

9. Dispositif de test selon la revendication 8, **caractérisé en ce qu'**un rail de guidage linéaire est placé sur la base, et la base de montage est reliée de façon coulissante au rail de guidage linéaire par l'intermédiaire d'un second ensemble de calage, et le second ensemble de calage comprend :
une seconde base mobile, reliée de façon coulissante au rail de guidage linéaire ;
un second organe de fixation, qui passe à travers la base de montage et est relié de façon fixe à la seconde base mobile ;
un second élément élastique, emmanché sur le second organe de fixation, et les deux extrémités du second élément élastique viennent respectivement en butée contre la base de montage et la seconde base mobile.

10. Dispositif de test selon la revendication 1, **caractérisé en ce que** le dispositif de test comprend en outre un troisième mécanisme de test, et le troisième mécanisme de test comprend :
une tige de poussée, disposée sur la base de montage, la tige de poussée étant conçue pour pousser l'écrou cannelé de la vis à cannelure afin qu'ils se déplacent ensemble lorsque la base de montage se déplace ;
un groupe de miroirs, relié de façon fixe à la bague interne de l'écrou cannelé de la vis à cannelure ;
un interféromètre laser, disposé à l'opposé du groupe de miroirs.
